(19) Europäisches Patentamt
European Patent Office
Office européen des brevets

(11) Veröffentlichungsnummer : **0 151 369**
**B1**

(12) **EUROPÄISCHE PATENTSCHRIFT**

(45) Veröffentlichungstag der Patentschrift : **09.09.87**

(51) Int. Cl.$^4$ : **C 09 B 55/00**

(21) Anmeldenummer : **84810647.2**

(22) Anmeldetag : **19.12.84**

(54) **Unsymmetrische 1:2-Chromkomplexe, enthaltend eine Azo- und eine Azomethinverbindung.**

(30) Priorität : **19.01.84 CH 224/84**

(43) Veröffentlichungstag der Anmeldung : **14.08.85 Patentblatt 85/33**

(45) Bekanntmachung des Hinweises auf die Patenterteilung : **09.09.87 Patentblatt 87/37**

(84) Benannte Vertragsstaaten :
**CH DE FR GB LI**

(56) Entgegenhaltungen :
**FR-A- 2 392 087**
**FR-A- 2 399 466**
**Die Akte enthält technische Angaben, die nach dem Eingang der Anmeldung eingereicht wurden und die nicht in dieser Patentschrift enthalten sind.**

(73) Patentinhaber : **CIBA-GEIGY AG**
**Klybeckstrasse 141**
**CH-4002 Basel (CH)**

(72) Erfinder : **Püntener, Alois, Dr.**
**Pulverweg 13**
**CH-4310 Rheinfelden (CH)**

**EP 0 151 369 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Es sind bereits z. B. aus der FR-A 2, 392, 087 1 : 2-Chromkomplexe, enthaltend eine Azo- und eine Azomethinverbindung, bekannt, welche eine aromatische oder aliphatische o-Aminohydroxyverbindung, eine aromatische oder aliphatische o-Aminocarboxyverbindung oder ein aliphatisches Diamin als Aminkomponente des Azomethinfarbstoffes aufweisen.

Gegenstand der vorliegenden Erfindung sind 1 : 2-Chromkomplexfarbstoffe der Formel I

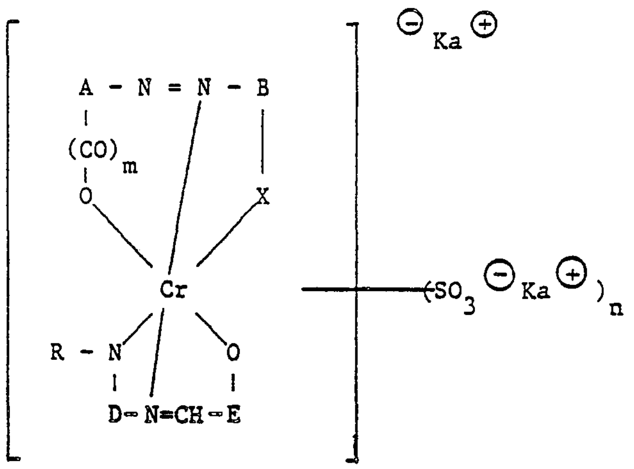

(I)

worin

A den Rest einer Diazokomponente der Benzol- oder Naphthalinreihe, welche die Hydroxy- oder Carboxygruppe in o-Stellung zur Azogruppe trägt,

B den Rest einer Kupplungskomponente, welche die Gruppe X in Nachbarstellung zur Azogruppe trägt,

X Sauerstoff oder einen Rest der Formel —NY—, wobei Y Wasserstoff, Phenyl oder $C_1$-$C_4$-Alkyl bedeutet,

D den Rest eines aromatischen Diamins, dessen Aminogruppen in o-Stellung zueinander stehen,

E den Rest eines aromatischen o-Hydroxyaldehyds,

R Wasserstoff, gegebenenfalls substituiertes Alkyl, Aralkyl, Aryl, Alkylsulfonyl oder Arylsulfonyl,

m 0 oder 1,

n eine ganze Zahl von 0 bis 6 und

$Ka^{\oplus}$ ein Kation bedeutet.

In den erfindungsgemässen Chromkomplexfarbstoffen der obigen Formel I können die Reste A, B, D und E noch einen oder mehrere weitere Substituenten tragen, z. B. niedermolekulares Alkyl oder Alkoxy, Halogen, wie z. B. Chlor oder Brom, Nitro, Cyano, Sulfo, Carboxy, Phosphono, Alkylsulfonyl, wie z. B. Methylsulfonyl, Sulfamide, wie z. B. Sulfamid oder N-Methylsulfamid, oder Acylamino. Als Substituenten für die Reste A, B und E kommen ausserdem die Phenylazo- und die Naphthalazogruppe in Betracht, wobei diese Gruppen noch substituiert sein können, z. B. durch Sulfo, Nitro, Chlor, niedermolekulares Alkyl oder Alkoxy, Carboxy, Sulfamoyl oder Acylamino. Unter niedermolekularen Alkyl- oder Alkoxygruppen sind in dieser Anmeldung generell solche mit 1 bis 6, vorzugsweise 1 bis 2 C-Atomen zu verstehen und mit « Acylamino » werden niedermolekulare Alkanoylamino-, Alkylsulfonylamino- und Alkoxycarbonylaminoreste sowie Aroylamino- und Arylsulfonylaminoreste bezeichnet.

Der Rest A leitet sich beispielsweise von folgenden Aminen ab :

Anthranilsäure, 4- oder 5-Chloranthranilsäure, 4- oder 5-Sulfoanthranilsäure, 2-Amino-3-naphthoesäure, 2-Amino-1-hydroxybenzol, 4-Chlor- und 4,6-Dichlor-2-amino-1-hydroxybenzol, 4- oder 5-Nitro-2-amino-1-hydroxybenzol, 4-Chlor, 4-Methyl- und 4-Acetylamino-6-nitro-2-amino-1-hydroxybenzol, 6-Acetylamino- und 6-Chlor-4-nitro-2-amino-1-hydroxybenzol, 4-Cyan-2-amino-1-hydroxybenzol, 4-Sulfonamido-2-amino-1-hydroxybenzol, 1-Hydroxy-2-aminobenzol-4-sulfoanthranilid, 4-Methoxy-2-amino-1-hydroxybenzol, 4-Methoxy-5-chlor-2-amino-1-hydroxybenzol, 4-Methyl-2-amino-1-hydroxybenzol, 4-Chlor-5-nitro-2-amino-1-hydroxybenzol, 3,4,6-Trichlor-2-amino-1-hydroxybenzol, 6-Acetylamino-4-chlor-2-amino-1-hydroxybenzol, 4,6-Dinitro-2-amino-1-hydroxybenzol, 2-Amino-1-hydroxybenzol-4- oder -5-sulfonsäure, 4-Nitro-2-amino-1-hydroxybenzol-6-sulfonsäure, 6-Nitro-2-amino-1-hydroxybenzol-4-sulfosäure, 4-Chlor-2-amino-1-hydroxybenzol-6-sulfosäure, 1-Amino-2-hydroxynaphthalin-4-sulfosäure, 1-Amino-2-hydroxy-6-nitronaphthalin-4-sulfosäure, 1-Amino-2-hydroxy-6-chlornaphthalin-4-sulfosäure, 1-Amino-2-hydroxynaphthalin-4,6-disulfosäure, 2-Amino-1-hydroxybenzol-4,6-disulfosäure, 2-Amino-4-methylsulfonyl-1-hydroxybenzol.

Statt der oben genannten Amine mit Hydroxygruppen kommen für A auch entsprechende Methoxyverbindungen oder entsprechende Verbindungen, deren Hydroxygruppe tosyliert wurde, in Betracht, wie Anisidin, 4- oder 5-Chloranisidin, 4- oder 5-Nitroanisidin, Anisidin-4- oder -5-sulfosäure, oder tosyliertes 1-Hydroxy-2-aminobenzol, wobei die Methoxy- oder O-Tosylgruppe vor oder bei der Metallisierung in eine OH-Gruppe umgewandelt wird. Verbindungen mit diesen Gruppen werden vor allem dann eingesetzt, wenn die entsprechenden 1-Hydroxy-2-amino-verbindungen schlecht kuppeln.

In bevorzugten Farbstoffen der Formel I bedeutet A den Rest eines 1-Hydroxy-2-aminobenzols, welcher gegebenenfalls durch Chlor, Nitro, Sulfo oder niedrigmolekulares Alkyl oder Alkoxy substituiert ist, oder den Rest eines 1-Amino-2-hydroxy-4-sulfonaphthalins, welcher gegebenenfalls in 6-Stellung durch Chlor, Nitro oder Sulfo substituiert ist.

Der Rest B leitet sich vorzugsweise von folgenden Gruppen von Kupplungskomponenten ab : gegebenenfalls durch niedermolekulares Alkyl oder Alkoxy, Dialkylamino, oder Acylamino substituierte, in o-Stellung kuppelnde Phenole, wobei Acylamino $C_1$-$C_4$-Alkanoylamino-, $C_1$-$C_4$-Alkylsulfonylamino-, $C_1$-$C_4$-Alkoxycarbonylamino-, Aroylamino- oder Arylsulfonylaminoreste bedeutet ; Naphthole, die gegebenenfalls mit $C_1$-$C_4$-Alkyl oder Alkoxy, Chlor, Amino, Acylamino oder Sulfo substituiert sind, wobei Acylamino dieselbe Bedeutung hat, die vorne angegeben ist ; 5-Pyrazolone oder 5-Aminopyrazole, vorzugsweise solche, die in 1-Stellung einen gegebenenfalls mit Chlor, Nitro, $C_1$-$C_4$-Alkyl- oder -Alkoxygruppen oder Sulfogruppen substituierten Phenyl- oder Naphthylrest besitzen und in 3-Stellung eine $C_1$-$C_4$-Alkyl- oder Carboxygruppe, insbesondere eine Methylgruppe aufweisen ; Naphthylamine, die gegebenenfalls mit Sulfo-, Sulfonamido- oder Sulfongruppen substituiert sind ; Acetessigsäureamide, vor allem Acetessigsäureanilide, und Benzoylessigsäureanilide, die im Anilidkern gegebenenfalls mit Chlor, Brom, Nitro, $C_1$-$C_4$-Alkyl- oder Alkoxy- oder Sulfogruppen substituiert sein können ; 6-Hydroxy-3-cyano- oder 6-Hydroxy-3-carbonamido-4-alkyl-2-pyridone, die in 1-Stellung durch gegebenenfalls substituiertes $C_1$-$C_4$-Alkyl, z. B. Methyl, Isopropyl, β-Hydroxyethyl, β-Aminoethyl oder γ-Isopropoxypropyl oder durch Phenyl substituiert sind, und in 4-Stellung eine $C_1$-$C_4$-Alkylgruppe, insbesondere Methyl, tragen können, oder Hydroxychinoline.

Beispiele solcher Kupplungskomponenten sind :

2-Naphthol, 1-Naphthol, 1-Acetylamino-7-naphthol, 1-Propionylamino-7-naphthol, 1-Carbomethoxyamino-7-naphthol, 1-Carboethoxyamino-7-naphthol, 1-Carbopropoxyamino-7-naphthol, 6-Acetyl-2-naphthol, 2-Naphthol-, -3-, -4-, -5-, -6-, -7- oder -8-sulfonsäure, 1-Naphtol-3-, -4- oder -5- sulfosäure, 1-Naphthol-3,6- oder 4,8-disulfonsäure, 2-Naphthol-6,8-disulfosäure, 4-Methyl-1-naphthol, 4-Methoxy-1-naphthol, 4-Acetyl-1-naphthol, 5,8-Dichlor-1-naphthol, 5-Chlor-1-naphthol, 2-Naphthylamin, 2-Naphthylamin-1-sulfosäure, 1-Naphtylamin-4- oder -5-sulfosäure, 2-Aminonaphthalin-6-sulfosäure, 2-Aminonaphthalin-5-sulfosäure, 6-Methylsulfonyl-2-aminonaphthalin, 1-Phenyl-3-methyl-pyrazol-5-on, 1-Phenyl-5-pyrazolon-3-carbonsäureamid, 1-(2'-, 3'- oder 4'-Methylphenyl)-3-methylpyrazol-5-on, 1-(2'-, 3'- oder 4'-Sulfophenyl)-3-methylpyrazol-5-on, 1-(2'-Chlor-5'-sulfophenyl)-3-methyl-pyrazol-5-on, 1-(2'- oder 4'-Methoxyphenyl)-3-methylpyrazol-5-on, 1-(2'-, 3'- oder 4'-Chlorphenyl)-3-methylpyrazol-5-on, 1-(2'-, 3'- oder 4'-Nitrophenyl)-3-methylpyrazol-5-on, 1-(2',5'- oder 3',4'-Dichlorphenyl)-3-methylpyrazol-5-on, 1-(2',5'- oder 3',4'-Dichlorphenyl)-3-methylpyrazol-5-on, 1-(2',5'-Dichlor-4'-sulfophenyl)-3-methylpyrazol-5-on, 1-(2'-, 3'- oder 4'-Sulfophenyl)-3-methyl-5-aminopyrazol, 1-Phenyl-3-methyl-5-aminopyrazol, 1-(2'-Chlor-5'-sulfophenyl)-3-methyl-5-aminopyrazol, Acetoacetanilid, Acetoacetanilid-4-sulfosäure, Acetoacet-o-anisidid, Acetoacet-o-toluidid, Acetoacet-o-chloranilid, Acetoacet-m-xylidid, Tetralol, 4-Methylphenol, 3-Dialkylaminophenole, besonders 3-Dimethylamino- und 3-Diethylaminophenol, 4-Butylphenol, vorzugsweise 4-tert.-Butylphenol, 4-Amylphenol, insbesondere 4-t-Amylphenol, 2-Isopropyl-4-methylphenol, 2- oder 3-Acetylamino-4-methylphenol, 2-Methoxycarbonylamino-4-methylphenol, 2-Ethoxycarbonylamino-4-methylphenol und 3,4-Dimethylphenol, 1-Methyl-3-cyano-4-ethyl-6-hydroxypyridon, 1-Methyl-3-cyano-4-methyl-6-hydroxypyridon, 1-Phenyl-3-carbonamido-4-methyl-6-hydroxypyridon, 1-Ethyl-4-hydroxy-2-chinolon, 2,4-Dihydroxychinolin oder 3-Methylpyrazol-5-on.

Vorzugsweise stellt die Kupplungskomponente B ein gegebenenfalls durch Amino und/oder Sulfo substituiertes 1- oder 2-Naphthol, 1- oder 2-Naphthylamin, gegebenenfalls substituiert durch Sulfo, p-Alkyl-($C_1$-$C_6$)-phenol, 1-Phenyl-3-methyl-5-pyrazolon oder Acetessigsäureanilid dar, wobei die Phenylgruppe in den beiden letztgenannten Verbindungen durch $C_1$-$C_4$-Alkyl, $C_1$-$C_4$-Alkoxy, Chlor, Nitro oder Sulfo substituiert sein kann.

Geeignete Diamine, von denen sich der Rest D ableitet sind z. B. : 1,2-Diaminobenzol, 1,2-Diamino-4-nitrobenzol, 1,2-Diaminobenzol-4-carbonsäure, 1,2-Diaminobenzol-4-sulfonsäure, 1,2-Diaminobenzol-5-carbonsäure oder -5-sulfonsäure, 1,2-Diaminobenzol-4-phosphonsäure, 1,2-Diamino-4-methylbenzol, 1,2-Diamino-4-chlorbenzol, 1,2-Diamino-4,5-dichlorbenzol, 1,2-Diamino-4-sulfamoylbenzol, 1-Amino-2-methylaminobenzol, 1-Amino-2-(4'-chlorphenylamino)-benzol, 1-Amino-2-äthylaminobenzol, 1-Amino-2-methylamino-5-methylsulfonylbenzol, 1-Amino-2-butylamino-5-methylsulfonylbenzol, 1-Amino-2-(tosylamino)-benzol, 1-Amino-2-methylsulfonylaminobenzol, 1-Amino-2-(2',4'-dinitrophenylamino)-benzol, 1-Amino-2-(2'-nitro-4'-sulfophenylamino)-benzol, 1-Amino-2-(2'-nitro-4'-methylsulfonylphenylamino)-benzol, 1,2-Diaminonaphthalin sowie 2,3-Diamino-5,6-di-cyanopyrazin.

Vorzugsweise ist D der Rest von durch Chlor, Nitro, Sulfo, Carboxy, Methyl, Methoxy oder

Methylsulfonyl substituiertem 1,2-Diaminobenzol und insbesondere der Rest von unstubstituiertem 1,2-Di-aminobenzol.

E stellt den Rest eines o-Hydroxyaldehyds dar, vorzugsweise eines o-Hydroxybenzaldehyds oder o-Hydroxynaphthaldehyds, welcher durch niedrigmolekulares Alkyl, Halogen, Sulfo, Phenylazo, Naphthylazo oder substituiertes Phenylazo oder Naphthylazo substituiert sein kann. Geeignete Aldehyde sind beispielsweise :

2-Hydroxy-1-naphthaldehyd, 1-Hydroxy-2-naphthaldehyd, 2-Hydroxybenzaldehyd, 3- und 5-Methyl-2-hydroxybenzaldehyd, 3,5-Dimethyl-2-hydroxybenzaldehyd, 5-Butyl-2-hydroxybenzaldehyd, 5-Chlor- oder 5-Brom-2-hydroxybenzaldehyd, 3-Chlor-2-hydroxybenzaldehyd, 3,5-Dichlor-2-hydroxybenzaldehyd, 5-Sulfo-2-hydroxybenzaldehyd, 3-Methyl-5-chlor-2-hydroxybenzaldehyd, 5-(Phenylazo)-2-hydroxybenzaldehyd, 5-(2'-, 3'- oder 4'-Sulfophenylazo)-2-hydroxybenzaldehyd, 5-(6'-Sulfonaphthyl-1'-azo)-2-hydroxybenzaldehyd oder 5-(4"-Sulfo-4'-phenylazo)-phenylazo-2-hydroxybenzaldehyd.

Vorzugsweise stellt E den Rest von 2-Hydroxybenzaldehyd, der in 5-Stellung durch eine Phenylazogruppe substituiert ist, welche gegebenenfalls durch Sulfo, Nitro, Chlor, Methyl, Methoxy, Carboxy, Acetylamino oder Sulfamoyl weitersubstituiert ist, dar.

R bedeutet Wasserstoff, gegebenenfalls substituiertes Alkyl, Aralkyl, Aryl, Alkylsulfonyl oder Arylsulfonyl. Als Alkylreste kommen vor allem niedermolekulare Alkylreste in Betracht und als Substituenten für diese z. B. die Hydroxy- und die Cyangruppe. Mit « Aralkyl » ist vor allem die Benzylgruppe und mit « Aryl » vor allem die Phenylgruppe gemeint, wobei die Phenylgruppen in den genannten Resten substituiert sein können, z. B. durch Sulfo, Sulfamoyl, N-mono- oder N,N-dialkyliertes Sulfamoyl, Alkylsulfonyl, Chlor, Brom, Nitro, Alkyl oder Alkoxy.

Vorzugsweise bedeutet R eine $C_1$-$C_4$-Alkylgruppe, eine gegebenenfalls durch Sulfo, Nitro, Chlor, Methyl, Methoxy, Sulfamoyl oder Methylsulfonyl substituierte Phenylgruppe oder insbesondere Wasserstoff.

Eine bevorzugte Gruppe der erfindungsgemässen Verbindungen sind die 1 : 2-Chromkomplexfarbstoffe der Formel II

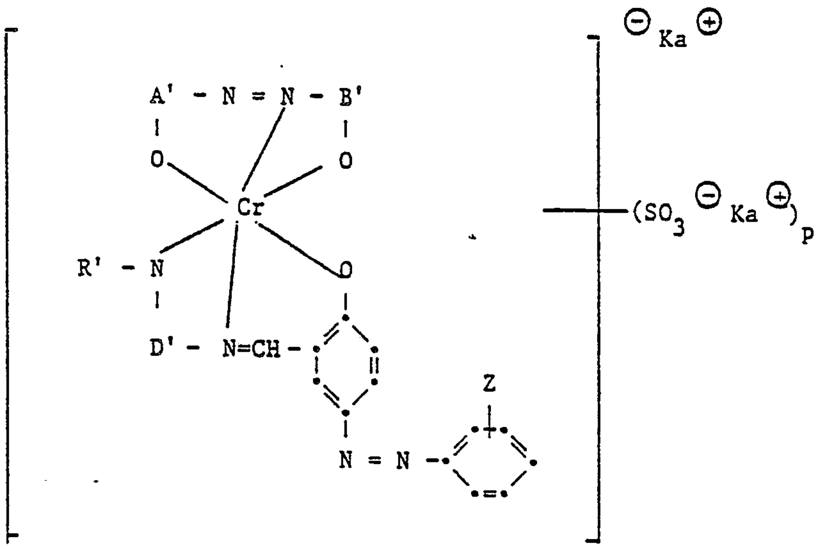

(II)

worin

A' den Rest eines 1-Hydroxy-2-aminobenzols, welcher gegebenenfalls durch Chlor, Nitro, Sulfo oder niedrigmolekulares Alkyl oder Alkoxy substituiert ist, oder den Rest eines 1-Amino-2-hydroxy-4-sulfonaphthalins, welcher gegebenenfalls in 6-Stellung durch Chlor, Nitro oder Sulfo substituiert ist,

B' ein gegebenenfalls durch Amino und/oder Sulfo substituiertes 1- oder 2-Naphthol, ein gegebenfalls durch Sulfo substituiertes 1- oder 2-Naphthylamin, p-Alkyl ($C_1$-$C_6$)-phenol, 1-Phenyl-3-methyl-5-pyrazolon oder Acetessigsäureanilid, wobei die Phenylgruppe in den beiden letztgenannten Verbindungen durch $C_1$-$C_4$-Alkyl, $C_1$-$C_4$-Alkoxy, Chlor, Nitro oder Sulfo substitiuert sein kann,

D' den Rest von gegebenenfalls durch Chlor, Nitro, Sulfo, Carboxy, Methyl, Methoxy oder Methylsulfonyl substituiertem 1,2-Diaminobenzol,

R' Wasserstoff, eine $C_1$-$C_4$-Alkylgruppe, eine gegebenenfalls durch Sulfo, Nitro, Chlor, Methyl, Methoxy, Sulfamoyl oder Methylsulfonyl substituierte Phenylgruppe,

Z Wasserstoff, Sulfo, Nitro, Chlor, Methyl, Methoxy, Carboxy, Acetylamino oder Sulfamoyl,

p 1, 2 oder 3 und

$Ka^{\oplus}$ ein Kation bedeutet.

Unter diesen sind diejenigen besonders bevorzugt, bei denen R' Wasserstoff ist, sowie diejenigen, bei denen Z Wasserstoff, Sulfo, Nitro oder Chlor ist.

Die erfindungsgemässen Farbstoffe der Formel I können nach an sich bekannten Methoden hergestellt werden, beispielsweise, indem man den 1 : 1-Chromkomplex des Azofarbstoffes der Formel III

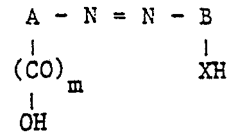

(III)

herstellt und diesen dann mit dem Farbstoff der Formel IV

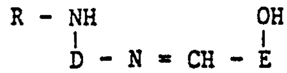

(IV)

oder vorzugsweise mit einem Gemisch des Diamins der Formel V

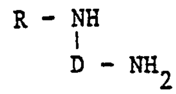

(V)

und des Aldehyds der Formel VI

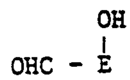

(VI)

umsetzt.

In den Formeln III bis VI weisen A, B, X, D, R, E und m die unter der Formel I angegebene Bedeutung auf.

Die Herstellung des 1 : 1-Chromkomplexes wird nach an sich bekannten Methoden, vorzugsweise in saurer Lösung mit Chrom-III-salzen durchgeführt. Anschliessend wird der 1 : 1-Chromkomplex in schwach saurem, neutralem oder schwach alkalischem Medium zum 1 : 2-Chromkomplex umgesetzt.

Die neuen Metallkomplexe werden vorteilhaft in Form ihrer Salze, insbesondere Alkali-, vor allem Lithium-, Natrium-, Kalium- oder Ammoniumsalze oder als Salze organischer Amine isoliert. Sie eignen sich je nach Konstitution zum Färben und Bedrucken von Materialien der verschiedensten Art und nach den verschiedensten Methoden, vor allem zum Färben von Materialien aus natürlichen oder synthetischen Polyamiden, wie Wolle und Seide, synthetische Polyamid- und Polyurethanfasern, Haare, und insbesondere zum Färben von Leder und Pelzen. Sie können auch zum Bedrucken der genannten Materialien dienen. Ausserdem können sie zum Färben von Lacken oder Spinnmassen sowie von Leder nach dem Aufspritzverfahren verwendet werden.

Die neuen Farbstoffe zeichnen sich vor allem durch ihre hohen Echtheiten, insbesondere die gute Lichtechtheit aus. Sie haben ein gutes Deckvermögen und geben egale Färbungen mit gleichzeitig guten Wasch-, Wasser-, Schweiss-, Alkali-, Säure-, Diffusions- und Reibechtheiten. Man erhält kräftige, orange, gelbbraune, rotbraune, dunkelbraune oder olivbraune Nuancen.

In den nachfolgenden Beispielen bedeuten die Teile sofern nichts anderes angegeben wird, Gewichtsteile, die Prozente, Gewichtsprozente, und die Temperaturen sind in Celsiusgraden angegeben.

Beispiel 1

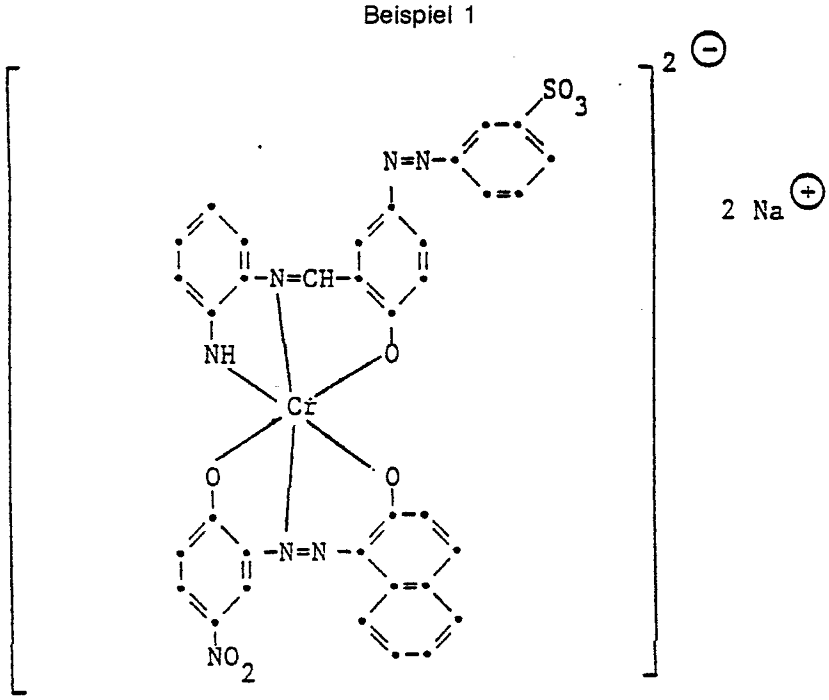

30,9 Teile des Farbstoffes, der aus diazotiertem 4-Nitro-2-aminophenol und 2-Naphthol erhalten wurde, werden nach üblicher Methode zum 1 : 1 Chromkomplex umgesetzt und mit 10,8 Teilen Diaminobenzol und 30,6 Teilen des Monoazofarbstoffes aus diazotierter 1-Aminobenzol-3-sulfonsäure und Salicylaldehyd in 500 Teilen Wasser auf 80° erwärmt. Der pH-Wert der Reaktionslösung wird dabei mit Natronlauge bei pH 6-8 gehalten. Nach Beendigung der Umsetzung wird der erhaltene Farbstoff durch Zugabe von 100 Teilen Natriumchlorid isoliert und getrocknet.

Das erhaltene dunkle Pulver färbt Wolle und Polyamid in einem Braunton mit guten Licht- und Nassechtheiten.

Das Aussalzen kann auch mit Lithiumchlorid, Ammoniumchlorid oder Kaliumchlorid oder -sulfat erfolgen. Man erhält dann vorwiegend die entsprechenden Lithium- bzw. Kalium- oder Ammoniumsalze des obigen Farbstoffes.

Beispiel 2

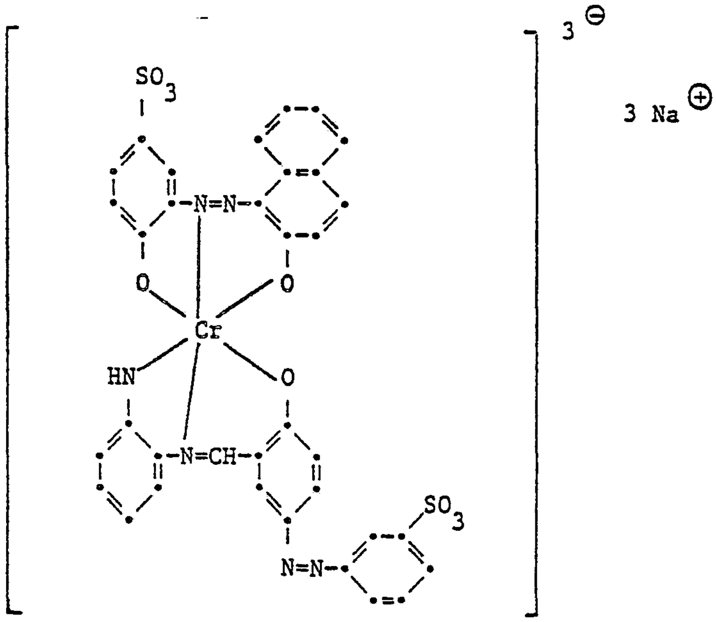

10,8 Teile 1,2-Diaminobenzol und 30,6 Teile des Monoazofarbstoffes aus diazotierter 1-Aminobenzol-3-sulfonsäure und Salicylaldehyd werden in 500 Teilen Wasser vorgelegt und mit dem zum 1 : 1 Chromkomplex umgesetzten Farbstoff, enthaltend 34,1 Teile der Monoazoverbindung von diazotierter 2-Aminophenol-4-sulfonsäure und 2-Naphthol, versetzt. Die Umsetzung zum obigen Farbstoff erfolgt durch Erhöhung der Temperatur auf 80°, wobei der pH-Wert mit Natronlauge bei 7 gehalten wird. Nachdem die Umsetzung zum obigen Farbstoff beendigt ist, wird das Wasser durch Eindampfen bzw. Sprühtrocknen entfernt. Das erhaltene dunkle Pulver färbt Leder in einem dunklen Braunton mit guten Nassechtheiten.

Arbeitet man wie in den Beispielen 1 und 2 beschrieben, verwendet jedoch den 1 : 1-Chromkomplex des in der folgenden Tabelle in Spalte 2 aufgeführten Azofarbstoffes und setzt diesen mit dem in Spalte 3 aufgeführten Azomethinfarbstoff bzw. mit dem diesen bildenden Amin und Aldehyd um, so erhält man 1 : 2-Chromkomplexe, welche Leder in der in Spalte 4 angegebenen Nuance färben.

(Siehe Tabelle 1 Seite 7 ff.)

Tabelle 1

| Beispiel | 1:1 Chromkomplex | Azomethin | Farbe |
|---|---|---|---|
| 1 | 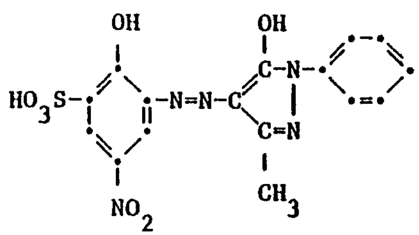 | 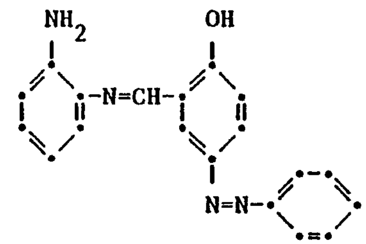 | Orange |
| 2 | 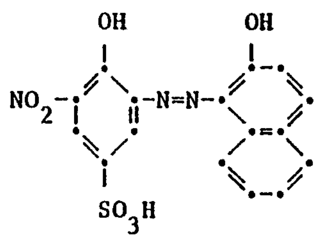 | 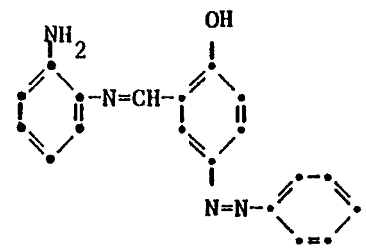 | Dunkelbraun |
| 3 | 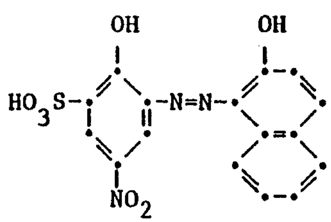 | 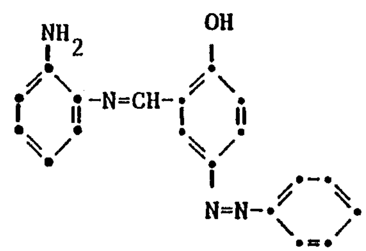 | Braun |

Tabelle 1 (Fortsetzung)

| Beispiel | 1:1 Chromkomplex | Azomethin | Farbe |
|---|---|---|---|
| 4 | 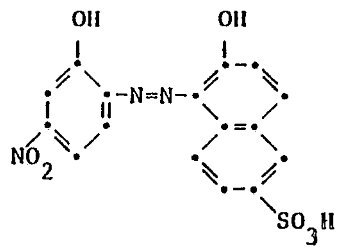 | 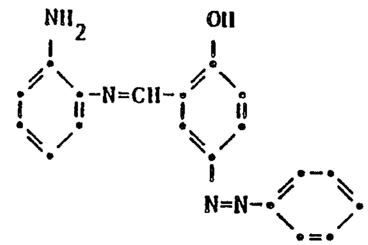 | Grün |
| 5 | 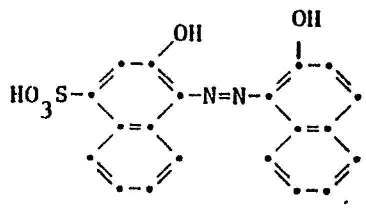 | 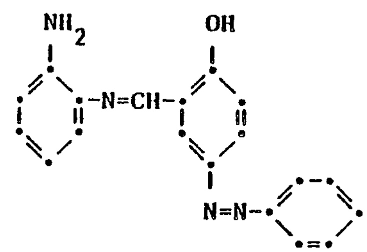 | Grün |
| 6 | 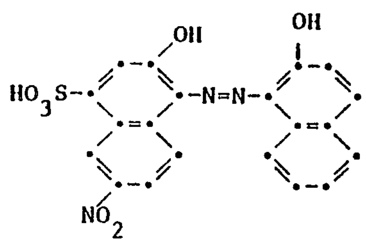 | 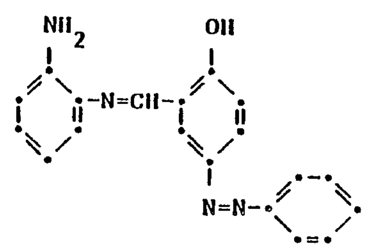 | Olive |

Tabelle 1 (Fortsetzung)

| Beispiel | 1:1 Chromkomplex | Azomethin | Farbe |
|---|---|---|---|
| 7 | 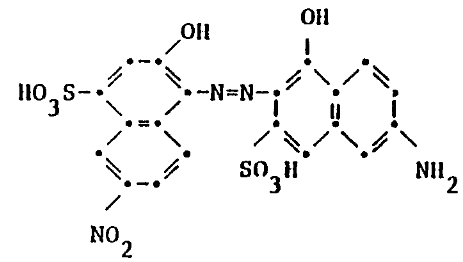 | 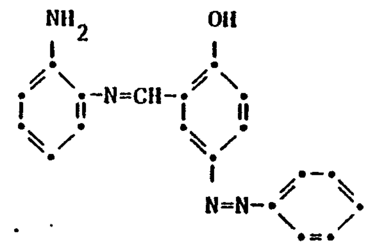 | Grün |
| 8 | 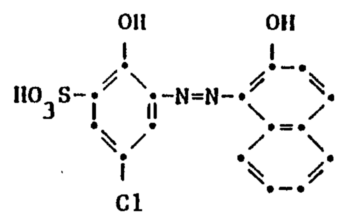 | 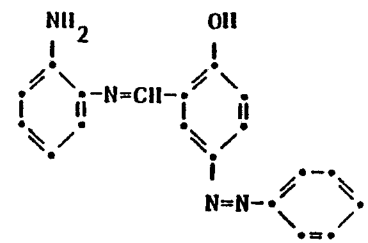 | Braun |
| 9. | 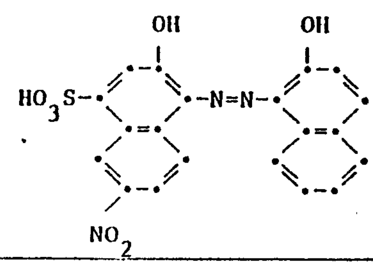 | 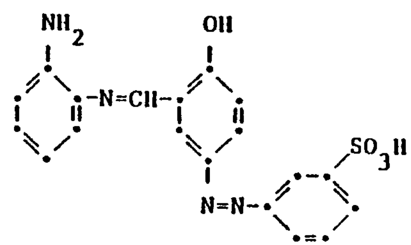 | Grün |

Tabelle 1 (Fortsetzung)

| Beispiel | 1:1 Chromkomplex | Azomethin | Farbe |
|---|---|---|---|
| 10 | 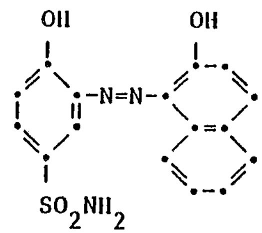 | 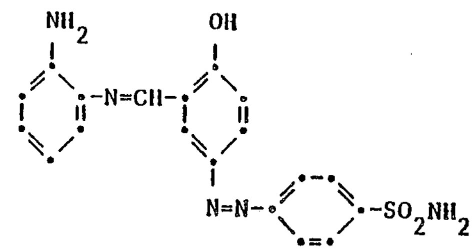 | Braun |
| 11 | 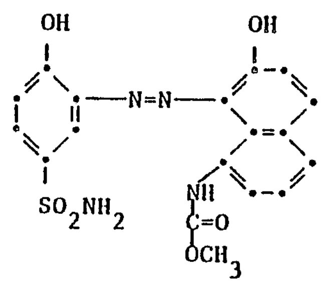 | 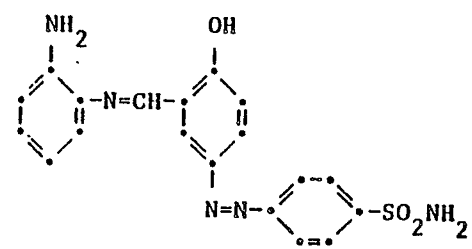 | Grün |
| 12 | 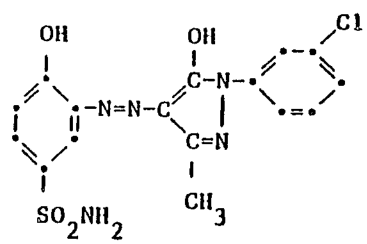 | 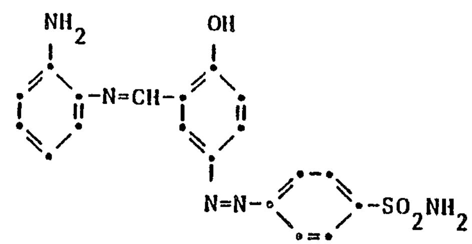 | Orange |

Tabelle 1 (Fortsetzung)

| Beispiel | 1:1 Chromkomplex | Azomethin | Farbe |
|---|---|---|---|
| 13 | 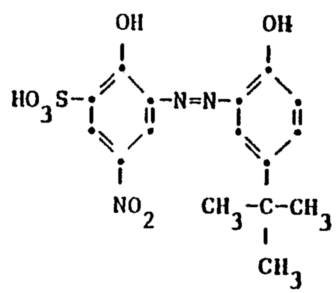 | 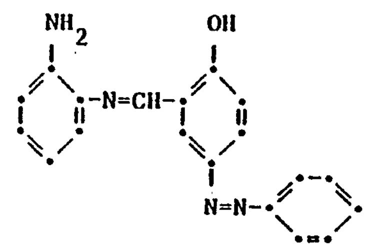 | Braun |
| 14 | 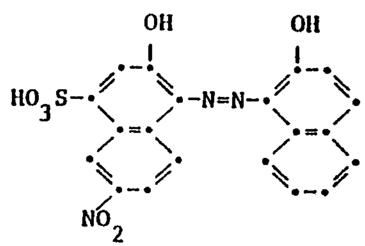 | 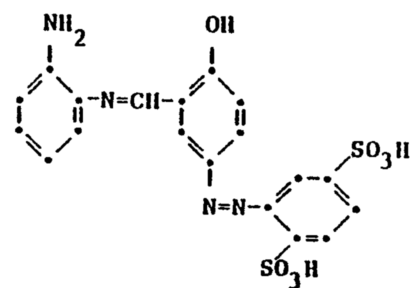 | Grün |
| 15 | 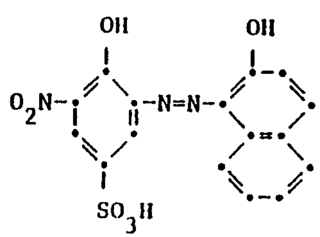 | 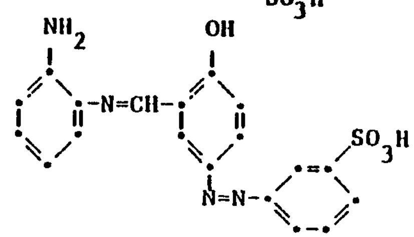 | Braun |

Tabelle 1 (Fortsetzung)

| Beispiel | 1:1 Chromkomplex | Azomethin | Farbe |
|---|---|---|---|
| 16 | 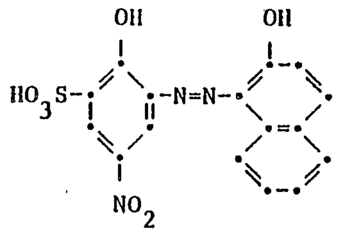 | 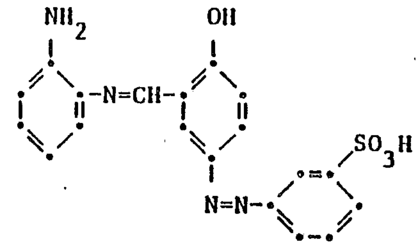 | Braun |
| 17 | 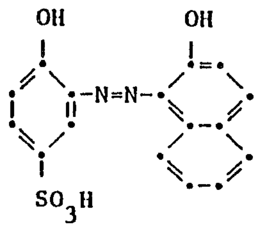 | 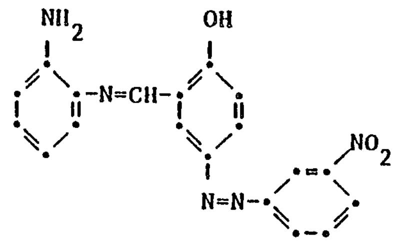 | Braun |
| 18 | 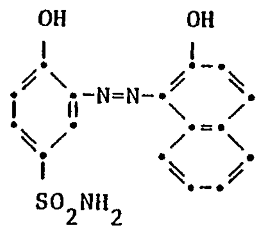 | 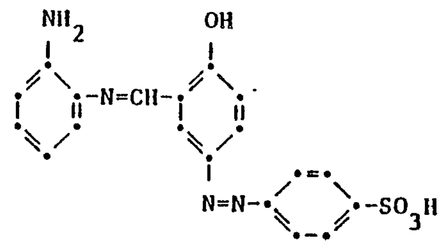 | Braun |

Tabelle 1 (Fortsetzung)

| Beispiel | 1:1 Chromkomplex | Azomethin | Farbe |
|---|---|---|---|
| 19 | 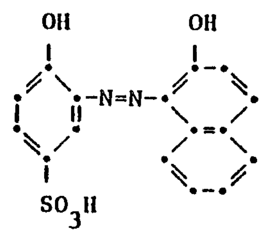 | 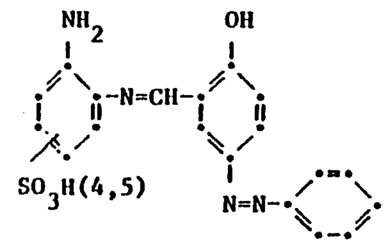 | Braun |
| 20 | 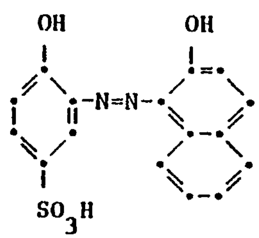 | 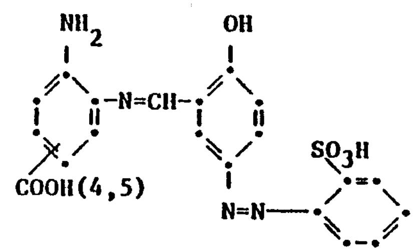 | Braun |
| 21 | 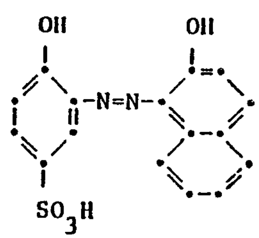 | 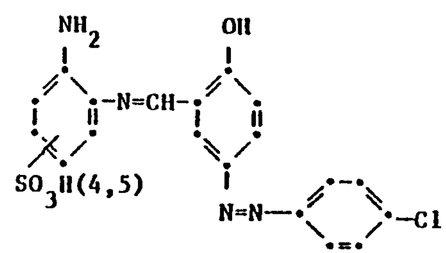 | Braun |

Tabelle 1 (Fortsetzung)

| Beispiel | 1:1 Chromkomplex | Azomethin | Farbe |
|---|---|---|---|
| 22 | 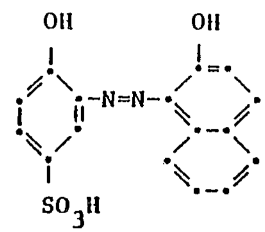 | 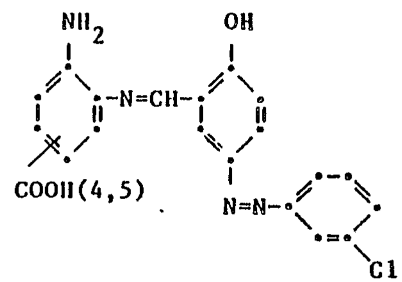 | Braun |
| 23 | 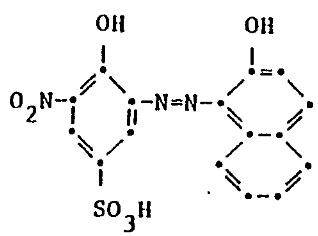 | 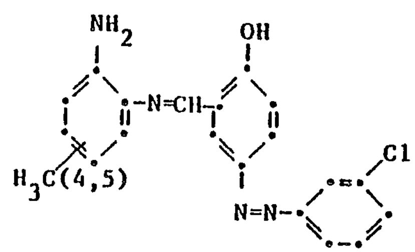 | Braun |
| 24 | 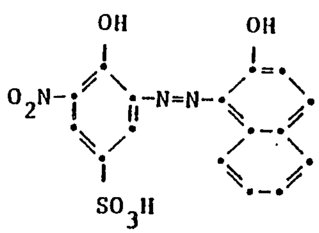 | 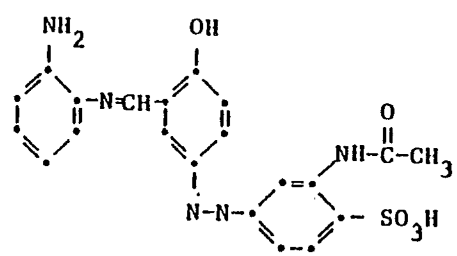 | Braun |

Tabelle 1 (Fortsetzung)

| Beispiel | 1:1 Chromkomplex | Azomethin | Farbstoffe |
|---|---|---|---|
| 25 | 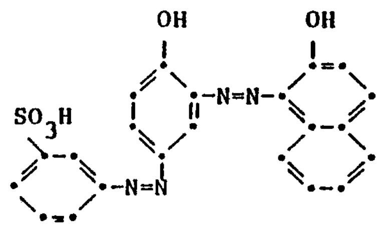 | 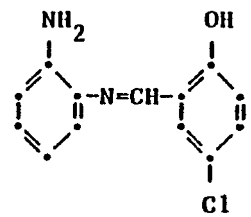 | Braun |
| 26 | 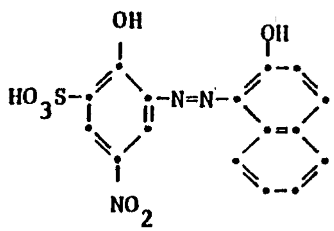 | 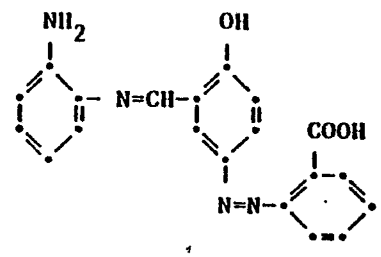 | Braun |

Färbevorschrift für Leder

100 Teile neutralisiertes chromgegerbtes Rindsleder werden mit 1,0 Teilen Farbstoff des Tabellen-Beispiels 7 in 500 Teilen Wasser bei 50 °C gefärbt. Nach 30 Minuten werden der Farbstoffflotte 3 Teile eines synthetischen Fettungsmittels (Gemisch aus Alkylbenzolen, aliphatischen Kohlenwasserstoffen, Alkansulfonsäuren und Tensiden) und nach weiteren 30 Minuten 0,5 Teile Ameisensäure 85 %-ig, verdünnt mit 5 Teilen Wasser zugesetzt. Nach 20 Minuten wird mit Wasser gespült und die Färbung in üblicher Weise fertiggestellt. Man erhält eine grüne Färbung mit guten Echtheiten.

Färbevorschrift für Polyamid

100 Teile Polyamidstrickgarn werden bei 50 °C in ein Färbebad eingeführt, das auf 4 000 Teile Wasser 2 Teile des Farbstoffes des Tabellen-Beispiels 3, 4 Teile Ammoniumsulfat und 2 Teile eines Egalisierhilfsmittels enthält. Die Flotte wird im Verlaufe von 45 Minuten zum Sieden gebracht und während weiterer 45 Minuten bei Kochtemperatur gehalten. Darauf wird das Färbegut herausgenommen, mit kaltem Wasser gründlich gespült und getrocknet. Man erhält ein braun gefärbtes Polyamid mit guten Echtheitseigenschaften.

Färbevorschrift für Wolle

100 Teile Wollstrickgarn werden bei 50 °C in ein Färbebad eingeführt, das auf 4 000 Teile Wasser 2 Teile des Farbstoffs des Tabellen-Beispiels 1, 4 Teile Ammoniumsulfat und 2 Teile eines Egalisierhilfsmittels enthält. Die Flotte wird im Verlaufe von 45 Minuten zum Sieden gebracht und während weiterer 45 Minuten bei Kochtemperatur gehalten. Darauf wird das Färbegut herausgenommen, mit kaltem Wasser gründlich gespült und getrocknet. Man erhält eine orangegefärbte Wolle mit guten Echtheitseigenschaften.

**Patentansprüche**

1. 1 : 2-Chromkomplexfarbstoffe der Formel

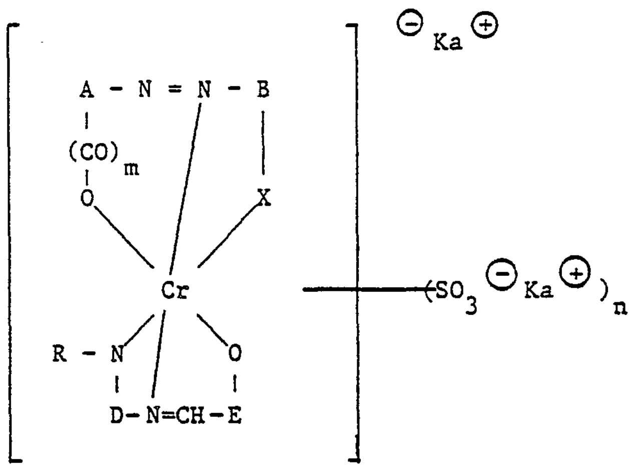

(I)

worin

A den Rest einer Diazokomponente der Benzol- oder Naphthalinreihe, welche die Hydroxy- oder Carboxygruppe in o-Stellung zur Azogruppe trägt,

B den Rest einer Kupplungskomponente, welche die Gruppe X in Nachbarstellung zur Azogruppe trägt,

X Sauerstoff oder einen Rest der Formel —NY—, wobei Y Wasserstoff, Phenyl oder $C_1$-$C_4$-Alkyl bedeutet,

D den Rest eines aromatischen Diamins, dessen Aminogruppen in o-Stellung zueinander stehen,

E den Rest eines aromatischen o-Hydroxyaldehyds,

R Wasserstoff, gegebenenfalls substituiertes Alkyl, Aralkyl, Aryl, Alkylsulfonyl oder Arylsulfonyl,

m 0 oder 1,

n eine ganze Zahl von 0 bis 6 und

$Ka^{\oplus}$ ein Kation bedeutet.

2. Farbstoffe gemäss Anspruch 1, worin B ein gegebenenfalls durch Amino und/oder Sulfo substituiertes 1- oder 2-Naphthol, 1- oder 2-Naphthylamin, gegebenenfalls substituiert durch Sulfo, p-Alkyl-($C_1$-$C_6$)-phenol, 1-Phenyl-3-methyl-5-pyrazolon oder Acetessigsäureanilid ist, wobei die Phenylgruppe in den beiden letztgenannten Verbindungen durch $C_1$-$C_4$-Alkyl, $C_1$-$C_4$-Alkoxy, Chlor, Nitro oder Sulfo substituiert sein kann.

3. Farbstoffe gemäss einem der Ansprüche 1 oder 2, worin D der Rest von 1,2-Diaminobenzol oder von durch Chlor, Nitro, Sulfo, Carboxy, Methyl, Methoxy oder Methylsulfonyl substituiertem 1,2-Diaminobenzol ist.

4. Farbstoffe gemäss einem der Ansprüche 1 bis 3, worin E den Rest von 2-Hydroxybenzaldehyd, der in 5-Stellung durch eine Phenylazogruppe substituiert ist, welche gegebenenfalls durch Sulfo, Nitro, Chlor, Methyl, Methoxy, Carboxy, Acetylamino oder Sulfamoyl weitersubstituiert ist, darstellt.

5. Farbstoffe gemäss einem der Ansprüche 1 bis 4, worin R Wasserstoff, eine $C_1$-$C_4$-Alkylgruppe, oder eine gegebenenfalls durch Sulfo, Nitro, Chlor, Methyl, Methoxy oder Methylsulfonyl substituierte Phenylgruppe bedeutet.

6. Farbstoffe der Formel II

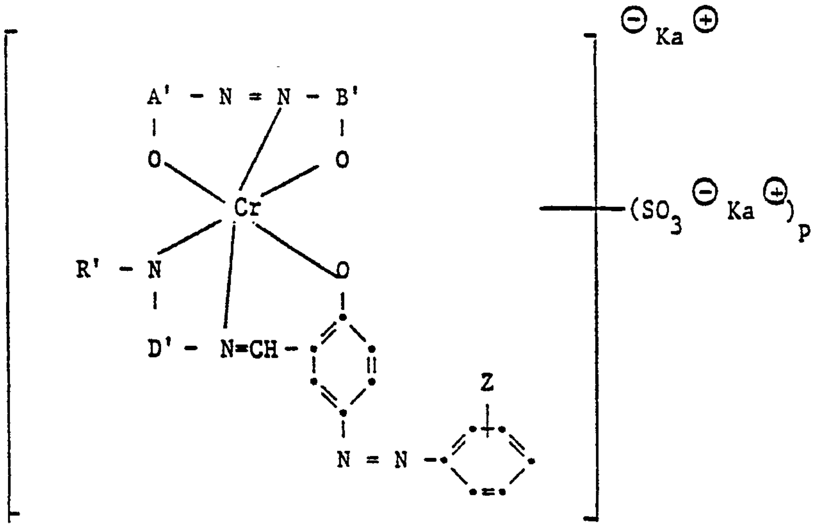

(II)

worin

A' den Rest eines 1-Hydroxy-2-aminobenzols, welcher gegebenenfalls durch Chlor, Nitro, Sulfo oder niedrigmolekulares Alkyl oder Alkoxy substituiert ist, oder den Rest eines 1-Amino-2-hydroxy-4-sulfonaphthalins, welcher gegebenenfalls in 6-Stellung durch Chlor, Nitro oder Sulfo substituiert ist,

B' ein gegebenenfalls durch Amino und/oder Sulfo substituiertes 1- oder 2-Naphthol, ein gegebenfalls durch Sulfo substituiertes 1- oder 2-Naphthylamin, p-Alkyl ($C_1$-$C_6$)-phenol, 1-Phenyl-3-methyl-5-pyrazolon oder Acetessigsäureanilid, wobei die Phenylgruppe in den beiden letztgenannten Verbindungen durch $C_1$-$C_4$-Alkyl, $C_1$-$C_4$-Alkoxy, Chlor, Nitro oder Sulfo substitiuert sein kann,

D' den Rest von gegebenenfalls durch Chlor, Nitro, Sulfo, Carboxy, Methyl, Methoxy oder Methylsulfonyl substituiertem 1,2-Diaminobenzol,

R' Wasserstoff, eine $C_1$-$C_4$-Alkylgruppe, eine gegebenenfalls durch Sulfo, Nitro, Chlor, Methyl, Methoxy, Sulfamoyl oder Methylsulfonyl substituierte Phenylgruppe,

Z Wasserstoff, Sulfo, Nitro, Chlor, Methyl, Methoxy, Carboxy, Acetylamino oder Sulfamoyl,

p 1, 2 oder 3 und

$Ka^{\oplus}$ ein Kation bedeutet.

7. Farbstoffe gemäss Anspruch 6, worin R' Wasserstoff ist.

8. Farbstoffe gemäss einem der Ansprüche 6 bis 7, worin Z Wasserstoff, Sulfo, Nitro oder Chlor ist.

9. Farbstoffe gemäss Ansprüchen 7 und 8, worin R' Wasserstoff und Z Wasserstoff, Sulfo, Nitro oder Chlor ist.

10. Verfahren zur Herstellung von Farbstoffen der Formel I gemäss Anspruch 1, dadurch gekennzeichnet, dass den 1 : 1-Chromkomplex des Azofarbstoffes der Formel III

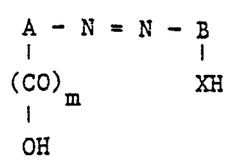

(III)

herstellt und diesen dann mit dem Farbstoff der Formel IV

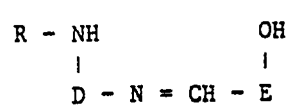

(IV)

oder vorzugsweise mit einem Gemisch des Diamins der Formel V

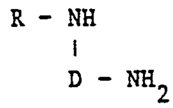

(V)

und des Aldehyds der Formel VI

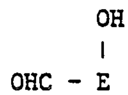

(VI)

umsetzt.

11. Verwendung von Farbstoffen der Formel I zum Färben von Wolle, Polyamid und insbesondere von Leder oder Pelzen.

**Claims**

1. A 1 : 2 chromium complex dye of the formula

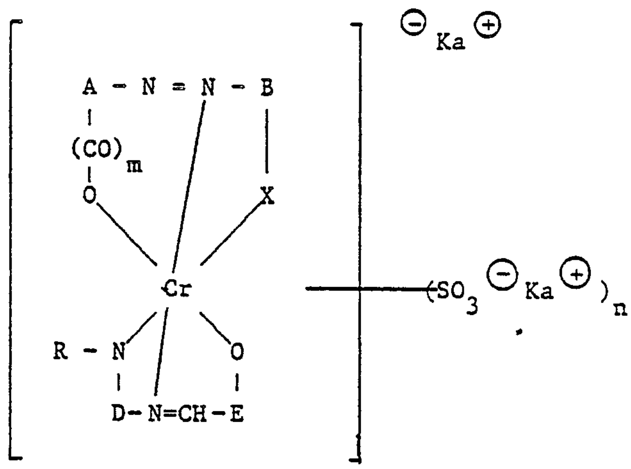

(I)

wherein

A is the radical of a diazo component of the benzene or naphthalene series which carries the hydroxyl or carboxyl group in the o-position relative to the azo group,

B is the radical of a coupling component which carries the group X in a position adjacent to the azo group,

X is oxygen or a radical of the formula —NY—, where Y is hydrogen, phenyl or $C_1$-$C_4$ alkyl,

D is the radical of an aromatic diamine, the amino groups of which are in o-position relative to each other,

E is the radical of an aromatic o-hydroxyaldehyde,

R is hydrogen, substituted or unsubstituted alkyl, aralkyl, aryl, alkylsulfonyl or arylsulfonyl,

m is 0 or 1,

n is an integer from 0 to 6 and

$Ka^{\oplus}$ is a cation.

2. A dye according to claim 1, in which B is 1- or 2-naphthol, unsubstituted or substituted by amino and/or sulfo, 1- or 2-naphthylamine, unsubstituted or substituted by sulfo, p-alkyl ($C_1$-$C_6$)-phenol, 1-phenol-3-methyl-5-pyrazolone or acetoacetanilide, the phenyl group of which two last-mentioned compounds may be substituted by $C_1$-$C_4$ alkyl, $C_1$-$C_4$ alkoxy, chlorine, nitro or sulfo.

3. A dye according to either of claims 1 or 2, in which D is the radical of 1,2-diaminobenzene or of 1,2-diaminobenzene which is substituted by chlorine, nitro, sulfo, carboxyl, methyl, methoxy or methylsulfonyl.

4. A dye according to any one of claims 1 to 3, in which E is the radical of 2-hydroxybenzaldehyde which is substituted in the 5-position by a phenylazo group which can be further substituted by sulfo, nitro, chlorine, methyl, methoxy, carboxyl, acetylamino or sulfamoyl.

5. A dye according to any one of claims 1 to 4, in which R is hydrogen, a $C_1$-$C_4$ alkyl group or a phenyl group which can be substituted by sulfo, nitro, chlorine, methyl, methoxy or methylsulfonyl.

6. A dye of the formula II

(See formula 2 page 19)

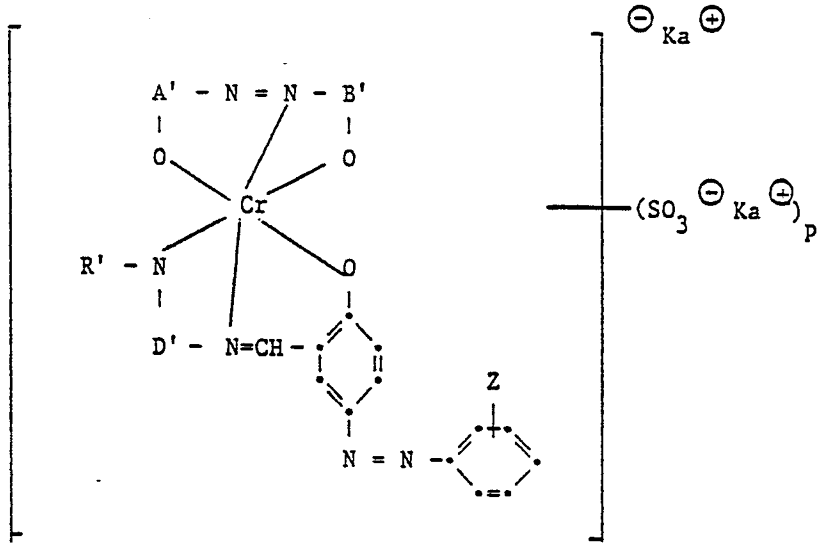

(II)

wherein

A′ is the radical of a 1-hydroxy-2-aminobenzene which can be substituted by chlorine, nitro, sulfo or low-molecular alkyl or alkoxy or is the radical of a 1-amino-2-hydroxy-4-sulfonaphthalene which may be substituted in the 6-position by chlorine, nitro or sulfo,

B′ is a 1- or 2-naphthol which may be substituted by amino and/or sulfo, a 1- or 2-naphthylamine which may be substituted by sulfo, p-alkyl ($C_1$-$C_6$) phenol, 1-phenyl-3-methyl-5-pyrazolone or acetoacetanilide, the phenyl group of which two last-mentioned compounds may be substituted by $C_1$-$C_4$ alkyl, $C_1$-$C_4$ alkoxy, chlorine, nitro or sulfo,

D′ is the radical of 1,2-diaminobenzene which may be substituted by chlorine, nitro, sulfo, carboxyl, methyl, methoxy or methylsulfonyl,

R′ is hydrogen, a $C_1$-$C_4$ alkyl group or a phenyl group which may be substituted by sulfo, nitro, chlorine, methyl, methoxy, sulfamoyl or methylsulfonyl,

Z is hydrogen, sulfo, nitro, chlorine, methyl, methoxy, carboxyl, acetylamino or sulfamoyl,

p is 1, 2 or 3, and

$Ka^{\oplus}$ is a cation.

7. A dye according to claim 6, in which R′ is hydrogen.

8. A dye according to either of claims 6 or 7, in which Z is hydrogen, sulfo, nitro or chlorine.

9. A dye according to either of claims 7 or 8, in which R′ is hydrogen and Z is hydrogen, sulfo, nitro or chlorine.

10. A process for the preparation of a dye of formula I according to claim 1 which comprises preparing the 1 : 1 chromium complex of the azo dye of formula III

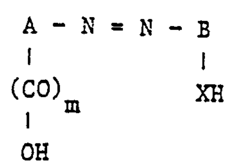

(III)

and then reacting said complex with the dye of formula IV

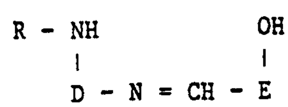

(IV)

or preferably with a mixture of the diamine of formula V

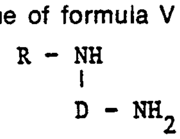

(V)

and the aldehyde of formula VI

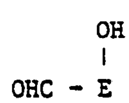

(VI)

11. Use of a dye of the formula I for dyeing wool, nylon and, in particular, leather or furs.

**Revendications**

1. Colorant à complexe de chrome 1 : 2 de formule

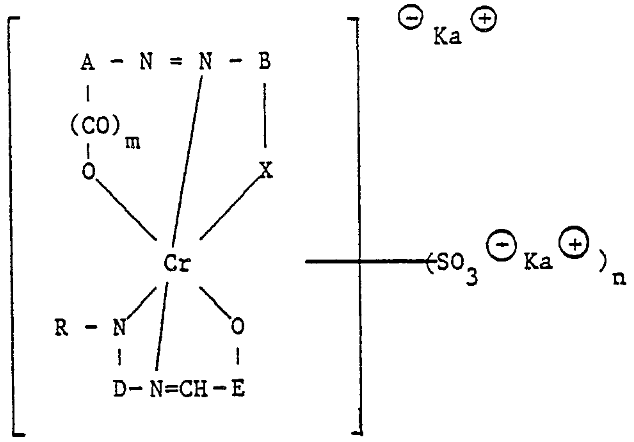

(I)

dans laquelle

A représente le résidu d'un composant diazo de la série du benzène ou du naphtalène, qui porte un groupe hydroxyle ou carboxyle en position o- par rapport au groupe azo,

B représente le résidu d'un composant de copulation, qui porte le groupe X en position adjacente à celle du groupe azo,

X représente un atome d'oxygène ou un résidu de formule —NY—, Y représentant un atome d'hydrogène ou un groupe phényle ou alkyle en $C_{1-4}$,

D représente le résidu d'une diamine aromatique, dont les groupes amino sont placés en position o- l'un par rapport à l'autre,

E représente le résidu d'un o-hydroxyaldéhyde aromatique,

R représente un atome d'hydrogène ou un groupe alkyle, aralkyle, aryle, alkylsulfonyle, ou arylsulfonyle, éventuellement substitué,

m vaut 0 ou 1,

n est un nombre entier pouvant aller de 0 à 6, et

$Ka^{\oplus}$ représente un cation.

2. Colorants conformes à la revendication 1, dans lesquels B représente un 1-naphtol ou un 2-naphtol, éventuellement substitué par un groupe amino et/ou sulfo, une 1-naphtylamine ou 2-naphtylamine, éventuellement substituée par un groupe sulfo, un p-(alkyl en $C_{1-6}$)-phénol, une 1-phényl-3-méthyl-5-pyrazolone ou un acétoacétanilide, le groupe phényle, dans les deux composés cités en dernier, pouvant être substitué par un atome de chlore ou un groupe alkyle en $C_{1-4}$, alcoxy en $C_{1-4}$, nitro ou sulfo.

3. Colorants conformes à l'une quelconque des revendications 1 et 2, dans lesquels D est le résidu du 1,2-diaminobenzène ou du 1,2-diaminobenzène substitué par un atome de chlore ou un groupe nitro, sulfo, carboxy, méthyle, méthoxy, ou méthylsulfonyle.

4. Colorants conformes à l'une quelconque des revendications 1 à 3, dans lesquels E représente le résidu du 2-hydroxybenzaldéhyde, substitué en position 5 par un groupe phénylazo, qui est à son tour éventuellement substitué par un atome de chlore ou un groupe nitro, sulfo, méthyle, méthoxy, carboxy, acétylamino ou sulfamoyle.

5. Colorants conformes à l'une quelconque des revendications 1 à 4, dans lesquels R représente un atome d'hydrogène, un groupe alkyle en $C_{1-4}$, ou un groupe phényle éventuellement substitué par un atome de chlore ou par un groupe nitro, sulfo, méthyle, méthoxy ou méthylsulfonyle.

6. Colorants de formule II

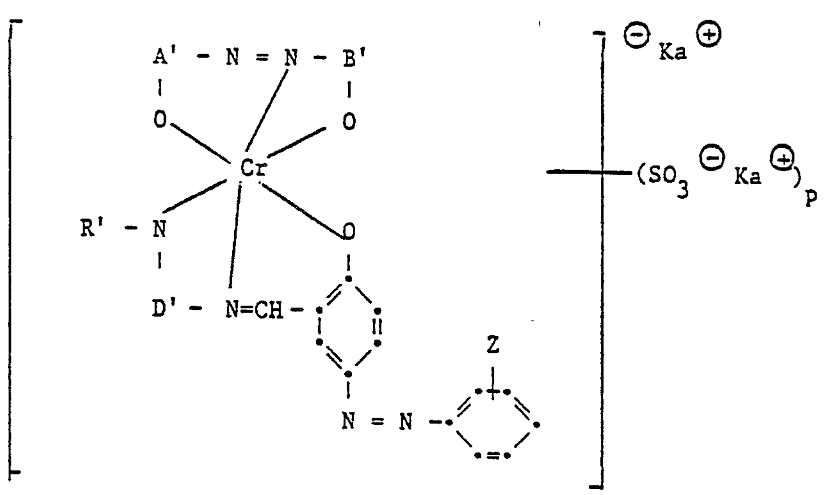

(II)

dans laquelle

A′ représente le résidu d'un 1-hydroxy-2-aminobenzène, éventuellement substitué par un atome de chlore ou par un groupe nitro, sulfo, alkyle inférieur ou alcoxy inférieur, ou bien le résidu d'un 1-amino-2-hydroxy-4-sulfonaphtalène, éventuellement substitué en position 6 par un atome de chlore, un groupe nitro ou un groupe sulfo,

B′ représente un 1-naphtol ou un 2-naphtol, éventuellement substitué par un groupe amino et/ou sulfo, une 1-naphtylamine ou 2-naphtylamine, éventuellement substituée par un groupe sulfo, un p-(alkyl en $C_{1-6}$)-phénol, une 1-phényl-3-méthyl-5-pyrazolone, ou un acétoacétanilide, le groupe phényle, dans les deux composés cités en dernier, pouvant être substitué par un atome de chlore ou par un groupe alkyle en $C_{1-4}$, alcoxy en $C_{1-4}$, nitro ou sulfo,

D′ est le résidu d'un 1,2-diaminobenzène, éventuellement substitué par un atome de chlore ou par un groupe nitro, sulfo, carboxy, méthyle, méthoxy ou méthylsulfonyle,

R′ représente un atome d'hydrogène ou un groupe alkyle en $C_{1-4}$, ou un groupe phényle éventuellement substitué par un atome de chlore ou par un groupe sulfo, nitro, méthyle, méthoxy, sulfamoyle ou méthylsulfonyle,

Z représente un atome d 'hydrogène ou de chlore, ou un groupe sulfo, nitro, méthyle, méthoxy, carboxy, acétylamino ou sulfamoyle,

p vaut 1, 2 ou 3, et

$Ka^{\oplus}$ représente un cation.

7. Colorants conformes à la revendication 6, dans lesquels R′ représente un atome d'hydrogène.

8. Colorants conformes à l'une quelconque des revendications 6 et 7, dans lesquels Z représente un atome d'hydrogène ou de chlore, ou un groupe sulfo ou nitro.

9. Colorants conformes aux revendications 7 et 8, dans lesquels R′ représente un atome d'hydrogène et Z représente un atome d'hydrogène ou de chlore, ou un groupe sulfo ou nitro.

10. Procédé de préparation des colorants de formule I conformes à la revendication 1, caractérisé en ce que l'on prépare le complexe de chrome 1 : 1 du coloran azoïque de formule III

$$\begin{array}{ccc} A & - N = N - & B \\ | & & | \\ (CO)_m & & XH \\ | & & \\ OH & & \end{array} \qquad (III)$$

et qu'on le fait réagir ensuite avec le colorant de formule IV

$$\begin{array}{ccc} R - NH & & OH \\ | & & | \\ D & - N = CH - & E \end{array} \qquad (IV)$$

ou de préférence, avec un mélange de la diamine de formule V

$$\begin{array}{c} R - NH \\ | \\ D - NH_2 \end{array} \qquad (V)$$

et de l'aldéhyde de formule VI

$$\begin{array}{r} OH \\ | \\ OHC - E \end{array} \qquad (VI)$$

11. Utilisation des colorants de formule I pour la teinture de laine, de polyamide, et en particulier de cuir ou de peaux.